Europäisches Patentamt

European Patent Office

Office européen des brevets

(11) Veröffentlichungsnummer : **0 052 242**
**B1**

# (12) EUROPÄISCHE PATENTSCHRIFT

(45) Veröffentlichungstag der Patentschrift :
24.04.85

(21) Anmeldenummer : 81108456.5

(22) Anmeldetag : 17.10.81

(51) Int. Cl.⁴ : **B 64 C 21/00**, B 64 C 21/04

(54) Anordnung zur Beeinflussung der Strömung an aerodynamischen Profilen.

(30) Priorität : 15.11.80 DE 3043567

(43) Veröffentlichungstag der Anmeldung :
26.05.82 Patentblatt 82/21

(45) Bekanntmachung des Hinweises auf die Patenterteilung : 24.04.85 Patentblatt 85/17

(84) Benannte Vertragsstaaten :
CH FR GB LI NL SE

(56) Entgegenhaltungen :
BE-A- 358 128
CH-A- 270 466
CH-A- 271 827
GB-A- 519 623
GB-A- 660 558
GB-A- 792 243
GB-A- 808 493
GB-A- 1 465 412
US-A- 4 033 526
JOURNAL OF AIRCRAFT, Band 4, März/April 1967,
Seiten 81-89, New York, U.S.A., M.R. HEAD et al.:
"Flight experiments on suction for high lift"

(73) Patentinhaber : **Deutsche Forschungs- und Versuchsanstalt für Luft- und Raumfahrt e.V.
Linder Höhe
D-5000 Köln 90 (DE)**

(72) Erfinder : **Quast, Armin, Dipl.-Ing.
Am Meinefeld 16
D-3300 Braunschweig (DE)**
Erfinder : **Horstmann, Karl-Heinz, Dipl.-Ing.
Dahlenweg 10
D-3300 Braunschweig (DE)**

(74) Vertreter : **Gralfs, Harro, Dipl.-Ing.
Am Bürgerpark 8
D-3300 Braunschweig (DE)**

EP 0 052 242 B1

## Beschreibung

Die Erfindung bezieht sich auf eine Anordnung nach dem Oberbegriff des Patentanspruches 1.

Bei einer derartigen bekannten Anordnung sind die Öffnungen insbesondere an der Unterseite der Profilnase angebracht, und zwar zwischen der Staulinie, wie sie bei Beginn der Ablösung vorliegt, und der Nasenlinie. Durch diese Öffnungen soll ein Strömungsabriss im Bereich der Profilnasenoberseite verhindert werden, wie er insbesondere bei dünnen Profilen bei großen Anstellwinkeln auftritt. Im Reiseflug bei hohen Reynolds-Zahlen soll das Ausblasen von Luft unterbunden werden, da anhand von Windkanalversuchen gezeigt wird, daß dadurch der Profilwiderstand erhöht wird (GB-A-792 243).

Zur Vermeidung von Grenzschichtablösungen sind weiter Öffnungen bekannt, die als sich im wesentlichen über die ganze Profilbreite erstreckende Schlitze ausgebildet sind, durch die Luft ausgeblasen wird. Das Ausblasen erfolgt hierbei mit großer Energie. Angestrebt wird hierbei, in der wandnahen Schicht durch Energiezufuhr die Geschwindigkeit der Strömung zu erhöhen und dadurch die Ablösegefahr zu beseitigen. (« Aerodynamik des Flugzeuges » von Schlichting und Truckenbrodt, erster Band, Seiten 260 bis 263 — Springer Verlag, 1959).

Bei einer bekannten Anordnung der genannten Art sind die Öffnungen in den Bereichen insbesondere der Profilnase angeordnet, an denen ein Strömungsabriß bei steigenden Anstellwinkeln auftritt. Im Reiseflug bei hohen Reynolds-Zahlen soll das Ausblasen von Luft unterbunden werden, von dem unterstellt wird, daß dadurch der Profilwiderstand erhöht wird (GB-A-792 243).

Es ist bekannt, daß laminare Strömung an Strömungskörpern und in Strömungskanälen laminare Ablöseblasen bilden kann. Durch diese laminaren Ablöseblasen wird der Widerstand aerodynamischer Profile erheblich erhöht. Es ist bekannt, daß laminare Ablöseblasen durch mechanische Turbulatoren, wie Stolperdrähte, hervorspringende Kanten, Stufen, Blechwinkel, geometrisch regelmäßig angeordnete Hindernisse und dergleichen vermieden werden können. Mechanische Turbulatoren verursachen jedoch zusätzliche Widerstände oder Verluste und sie erzeugen auch dann noch Verluste, wenn sie in anderen Betriebszuständen aus physikalischen Gründen nicht erforderlich sind, beispielsweise wenn durch Übergang zu höheren Reynolds-Zahlen im Betrieb keine laminaren Ablöseblasen mehr entstehen.

Es ist zwar möglich, laminare Ablöseblasen bei Profilen für niedrige Reynolds-Zahlen durch geeignete Formgebung (Druckverteilung längs der Wand) zu vermeiden. Eine solche Formgebung (Druckverteilung) ist jedoch nur für den bestimmten Entwurfspunkt wirksam. Außerhalb dieses Entwurfspunktes treten erhöhte Verluste auf. Außerdem ist die Vermeidung der laminaren Ablöseblasen durch geeignete Formgebung des Profils schwierig zu berechnen und besonders empfindlich gegen Fertigungsungenauigkeiten.

Aufgabe der Erfindung ist es, eine Anordnung zu schaffen, mit der es möglich ist, laminare Ablöseblasen ohne die Nachteile bekannter Lösungen zu verhindern oder diese in widerstandsvermindernder Weise zu reduzieren.

Diese Aufgabe wird gemäß der Erfindung durch die Merkmale nach Anspruch 1 gelöst.

Zweckmäßige Ausgestaltungen der Erfindung sind in den Unteransprüchen herausgestellt.

Die Erfindung ist in der Zeichnung in einem Ausführungsbeispiel veranschaulicht und im nachstehenden im einzelnen anhand der Zeichnung beschrieben.

Figur 1 zeigt eine schematische Draufsicht auf die Unterseite eines Flügels eines Segelflugzeuges.

Figur 2 zeigt einen Schnitt längs der Linie II-II in Fig. 1.

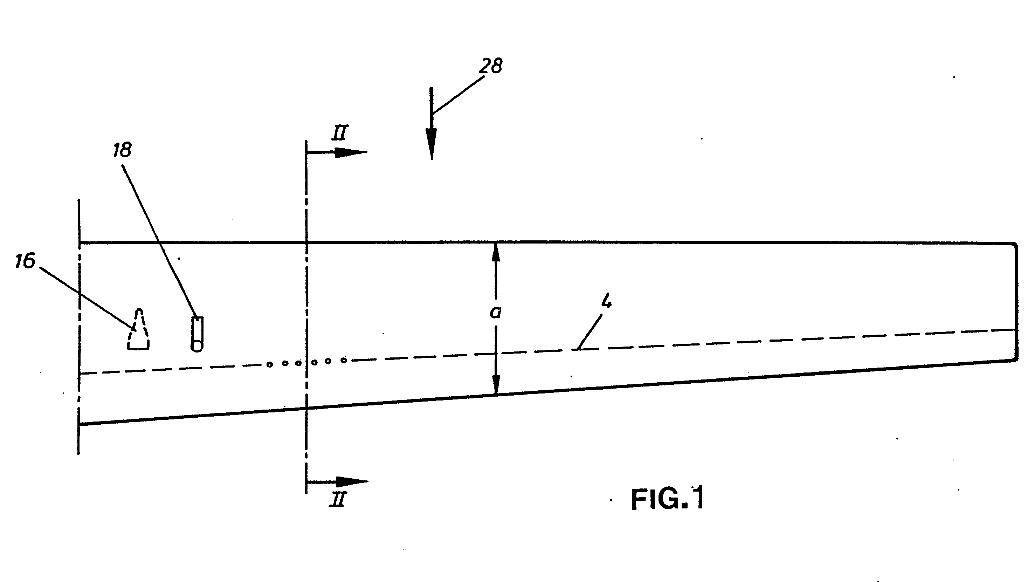

Der in Fig. 1 in Draufsicht auf seine Unterseite dargestellte Tragflügel eines Segelflugzeuges ist für eine niedrige Reynolds-Zahl von $2,5 \times 10^{+6}$ ausgelegt. Er wird in Richtung des Pfeils 28 angeströmt. Seine mittlere Profiltiefe a beträgt 75 cm. Bei der Unterseite dieses Profils beginnt die laminare Ablösung und damit die Ausbildung einer laminaren Ablöseblase bei 74 % der Profiltiefe. In einem entsprechenden Abstand von der Profilvorderkante ist in Längsrichtung des Flügels eine Vielzahl von Ausblasbohrungen 12 vorgesehen, die in Fig. 1 lediglich schematisch veranschaulicht sind und auf einer Linie 4 liegen, die in Fig. 1 gestrichelt dargestellt ist.

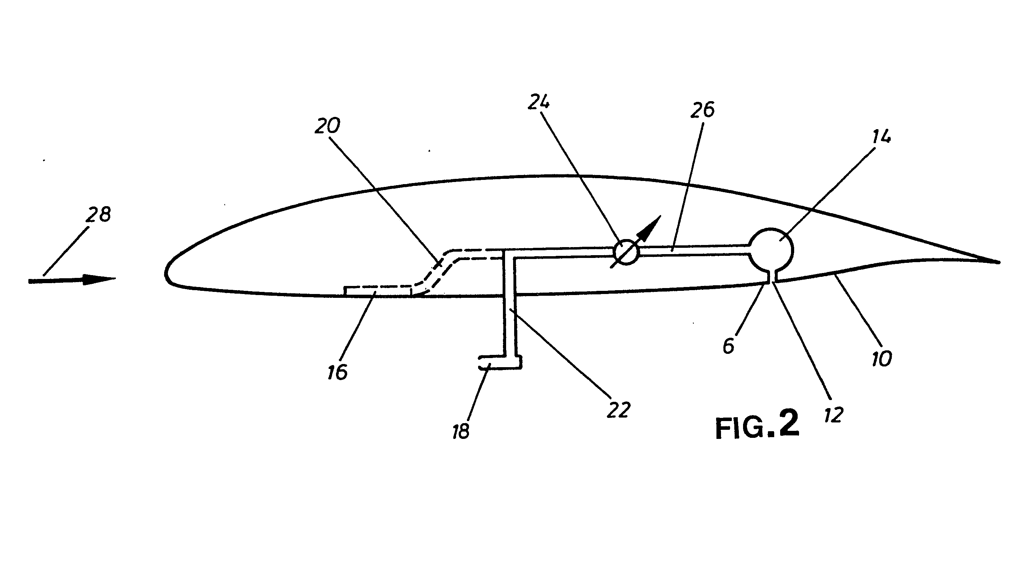

Im Profilquerschnitt nach Fig. 2 befindet sich die laminare Ablöseblase im Bereich zwischen den Linien 6 und 10. In diesem Bereich oder davor liegt die Linie 4 aus Fig. 1 mit einer Vielzahl von Ausblaseöffnungen 12, die als senkrecht zur Profiloberfläche geführte Bohrungen ausgeführt sind. In Fig. 2 ist ein sich in Längsrichtung des Tragflügels erstreckender Luftverteilungskanal 14 vorgesehen, in den Luft unter Druck eingespeist wird, die dann durch die Austrittsöffnungen 12 im wesentlichen senkrecht zur Profiloberfläche austritt. Es ist möglich, im Abstand voneinander verschiedene Reihen von Ausblasbohrungen vorzusehen, die jeweils in Abhängigkeit von der jeweiligen Reynolds-Zahl eingeschaltet werden.

Für die Luftzufuhr sind Staudruckanordnungen vorgesehen, z. B. in Form von außen liegenden Staurohren 18. Es können aber auch in das Profil oder Flugzeug integrierte Staudruckeinlässe, z. B. sogenannte NACA-Einlässe 16 vorgesehen werden. Über die Staudruckeinlässe 16 oder 18 wird der Luftkanal 14 mit Stauluft versorgt. In Fig. 2 ist dies schematisch durch die Leitungen 20, 22 dargestellt, die alternativ vorzusehen sind und beispielsweise über ein Steuerorgan 24 mit dem Luftkanal 14 über die Leitung 26 verbunden sind. Von den Staudruck erzeugenden Einlässen können über die Profilbreite, bei dem Ausführungsbeispiel also über die Flügellänge, mehrere vorgesehen sein. Diese können Luft dann in einen durchgehenden Luftkanal führen, oder aber auch in voneinander getrennte Luftkanalabschnitte. Als Luftkanal kann auch das ganze Flügelinnere oder ein Teil des Flügelinneren verwendet werden.

Die Anordnung ist so auszulegen, daß ein Ausblasebeiwert $C_Q = \dot{V}/(F \cdot V) \leqq 10^{-4}$, $\dot{V}$ = Volumenstrom, F = Flügelfläche und V = Anströmgeschwindigkeit des Flügelprofils, eingehalten wird.

Eine typische Dimensionierung der Ausblasöffnungen sieht vor, Blaslöcher von 0,6 mm Durchmesser im Abstand von 15 mm mit einer Ausblasegeschwindigkeit von ungefähr 10 m/s anzuordnen.

Bei einem ausgeführten Segelflugzeug wurde bei einer Reynolds-Zahl von $1,5 \times 10^{+6}$ eine Widerstandsverringerung und damit ein Gewinn bis 20 % erreicht. Dieser Gewinn fällt mit steigender Reynolds-Zahl ab. Durch ein außen liegendes Staurohr tritt ein Verlust von etwa 1 % des Gewinns auf. Es braucht also keine zusätzliche Leistung zum Ausblasen der Luft aufgewandt zu werden. Die Anordnung deckt ihren Leistungsbedarf aus dem durch sie erreichten Gewinn an Widerstandsverringerung.

Durch eine Steuerung der über die Staudruckanordnungen zugeführten Luftmenge mittels der Steuerung 24 läßt sich die Wirkung der Luftausblasung über einen bestimmten Bereich von Reynolds-Zahlen und/oder Anstellwinkeln anpassen. In vielen Fällen genügt es, zur Anpassung Mittel vorzusehen, mit denen die Wirkung der Luftausblasung abgeschaltet wird. Es ist selbstverständlich auch möglich, diese in allen Betriebszuständen aktiviert zu halten.

Eine sinngemäße Anordnung kann auch allein oder zusätzlich für die Profiloberseite vorgesehen werden. Anordnungen gemäß der Erfindung können auch gezielt beim Entwurf des Profils berücksichtigt werden. So kann beispielsweise für das Profil eine Druckverteilung gewählt werden, bei der der Ort des Strömungsumschlages und damit die Ausbildung einer laminaren Ablöseblase unabhängig von Fertigungsungenauigkeiten in einem definierten Bereich auftritt. Eine solche Auslegung des Profils würde dann ohne zusätzliche Mittel zu einer Vergrößerung der Ablöseblase und damit einer Vergrößerung des Widerstandes führen. Durch die erfindungsgemäße Anordnung ist auch eine derartige vergrößerte Ablöseblase in ihrer Wirkung eliminiert. Damit führen bei einem derart ausgelegten Profil Fertigungsungenauigkeiten nicht zu zusätzlichen Widerständen. Die Ausbildung erfolgt hierbei so, daß ein ausgeprägtes Druckminimum sehr weit nach hinten gelegt wird. Damit erhält man eine laminare Grenzschicht, die auch bei Fertigungsungenauigkeiten noch ausreichend stabil ist. In gleicher Weise kann verhindert werden, daß die laminare Strömung infolge Rauhigkeit turbulent wird und sich dadurch der Widerstand erhöht. Unter Rauhigkeit wird hierbei die Verschmutzung durch Staub, Einsansatz, aufgeschlagene Insekten, Regen und dergleichen verstanden.

Die Erfindung ist im vorstehenden anhand eines Tragflügels für ein Segelflugzeug beschrieben. Die Erfindung ist aber gleichwohl auch für andere aerodynamische Profile, wie Leitwerke und Rümpfe von Flugzeugen und Flugkörpern, ferner für Propeller, Hubschrauberrotoren sowie die Beschaufelung von Turbo-Maschinen, Lüftern und Windrädern anwendbar.

**Patentansprüche**

1. Anordnung zur Beeinflussung der Strömung an aerodynamischen Flügelprofilen durch Ausblasen von Fluiden durch eine Vielzahl von Öffnungen mit kleinem Querschnitt, die über die Profilbreite quer zur Anströmrichtung in Reihe gleichmäßig verteilt angeordnet sind, dadurch gekennzeichnet, daß bei Flügelprofilen, die für Reynolds-Zahlen $< 3 \times 10^{+6}$ ausgelegt sind, die Öffnungen im Bereich der Ablösestelle der laminaren Strömung angeordnet sind und einen Ausblasebeiwert $C_Q = \dot{V}/(F \cdot V) \leqq 1 \times 10^{-4}$ haben wobei $\dot{V}$ der Volumenstrom durch die Öffnungen, F die Flügelfläche und V die Anströmgeschwindigkeit des Flügelprofils ist.

2. Anordnung nach Anspruch 1, dadurch gekennzeichnet, daß die Ausblasrichtung der Ausblasöffnungen im wesentlichen senkrecht zur Profiloberfläche liegt.

3. Anordnung nach Anspruch 1, dadurch gekennzeichnet, daß für die Zufuhr und Drucküberhöhung des auszublasenden Fluids eine Staudruckanordnung vorgesehen ist.

4. Anordnung nach Anspruch 1, dadurch gekennzeichnet, daß die Ausblaseöffnungen einen Durchmesser < 1 mm, vorzugsweise zwischen 0,6 und 0,8 mm aufweisen.

5. Anordnung nach Anspruch 1, dadurch gekennzeichnet, daß die Ausströmgeschwindigkeit in der Größenordnung von 10 m/s liegt.

6. Anordnung nach Anspruch 1, dadurch gekennzeichnet, daß das Flügelprofil der Tragflügel eines langsam fliegenden Flugzeuges, vorzugsweise eines Segelflugzeuges oder Leitchtflugzeuges ist.

7. Anordnung nach Anspruch 6, dadurch gekennzeichnet, daß zur Gewinnung der Blasluft ein Staudruckeinlaß im/am Flügel vorgesehen ist.

8. Anordnung nach einem der vorhergehenden Ansprüche, dadurch gekennzeichnet, daß die Luftzufuhr zu den Ausblasöffnungen steuerbar ist.

9. Anordnung nach einem der vorhergehenden Ansprüche, dadurch gekennzeichnet, daß in der Profiltiefe im Abstand voneinander mehrere Reihen von Ausblasöffnungen vorgesehen sind.

**Claims**

1. Arrangement for controlling the airflow past aerodynamic wing airfoils by discharging fluids through multiple orifices having a small diameter and being uniformly distributed in a line along the spanwise direction of the airfoil perpendicular to the airflow past the airfoil, characterised in that, for wing airfoils designed for Reynolds Numbers $< 3 \times 10^{+6}$, the orifices are situated in a region of laminar separation and have a discharge coefficient $C_Q = \dot{V}/(F \cdot V) \leqq 1 \times 10^{-4}$, $\dot{V}$ being the volume flow through the orifices, F the wing area and V the free stream velocity.

2. Arrangement according to Claim 1, characterised in that the discharge direction of the discharge orifices is substantially perpendicular to the airfoil surface.

3. Arrangement according to Claim 1, characterised in that a total pressure system provides the fluid to be discharged.

4. Arrangement according to Claim 1, characterised in that the discharge orifices have a diameter $< 1$ mm, preferably between 0.6 and 0.8 mm.

5. Arrangement according to Claim 1, characterised in that the discharge velocity is of the order of 10 m/s.

6. Arrangement according to Claim 1, characterised in that the wing airfoil is the wing of an aircraft designed for low-speed flight, preferably a glider or light aircraft.

7. Arrangement according to Claim 6, characterised in that a total pressure inlet leading into the interior of the wing is provided to produce air to be discharged through the discharge orifices.

8. Arrangement according to any of the preceding claims, characterised in that means are provided to control the air supply to the discharge orifices.

9. Arrangement as claimed in any of the preceding claims, characterised in that there is a number of rows of discharge orifices spaced apart from each other in the direction of the chord of the airfoil.

**Revendications**

1. Dispositif pour influencer l'écoulement le long de profils aérodynamiques d'aile par éjection de fluides à travers de multiples ouvertures de petite section qui sont disposées en rangée et uniformément distribuées sur la largeur du profil, transversalement à la direction d'attaque, caractérisé par le fait que dans le cas de profils d'aile qui sont conçus pour des nombres de Reynolds inférieurs à $3 \times 10^{+6}$, les ouvertures sont disposées dans la région du point de décollement de l'écoulement laminaire et ont un coefficient d'éjection $C_Q = \dot{V}/(F \cdot V) \leqq 1 \times 10^{-4}$, $\dot{V}$ étant le débit volumétrique, F l'aire de l'aile et V la vitesse d'attaque du profil d'aile.

2. Dispositif selon la revendication 1, caractérisé par le fait que la direction d'éjection des ouvertures d'éjection est placée pratiquement perpendiculairement à la surface du profil.

3. Dispositif selon la revendication 1, caractérisé par le fait que pour l'amenée et l'élévation de pression du fluide à éjecter est prévu un dispositif à pression dynamique.

4. Dispositif selon la revendication 1, caractérisé par le fait que les ouvertures d'éjection présentent un diamètre inférieur à 1 mm, de préférence de 0,6 à 0,8 mm.

5. Dispositif selon la revendication 1, caractérisé par le fait que la vitesse d'échappement est de l'ordre de grandeur de 10 m/s.

6. Dispositif selon la revendication 1, caractérisé par le fait que le profil d'aile est la surface portante d'un avion volant lentement, de préférence d'un planeur ou d'un avion léger.

7. Dispositif selon la revendication 6, caractérisé par le fait que pour l'obtention de l'air soufflé, une admission de pression dynamique est prévue dans/sur l'aile.

8. Dispositif selon l'une des revendications précédentes, caractérisé par le fait que l'amenée d'air aux ouvertures d'éjection peut être commandée.

9. Dispositif selon l'une des revendications précédentes, caractérisé par le fait que dans la profondeur du profil, plusieurs rangées d'ouvertures d'éjection sont prévues avec espacement entre elles.

FIG.1

FIG.2